# FASCICULE DE BREVET EUROPEEN

(11) **EP 2 092 533 B1**
(45) Date de publication et mention de la délivrance du brevet: **25.05.2011**
(21) Numéro de dépôt: 07822260.1
(22) Date de dépôt: 06.11.2007
(51) Int. Cl.: G21F 5/012

(54) **DISPOSITIF DE TRANSPORT DE COMBUSTIBLE NUCLEAIRE ET PROCEDE DE CHARGEMENT/DECHARGEMENT DUDIT DISPOSITIF**
KERNBRENNSTOFF-TRANSPORTEINRICHTUNG UND VERFAHREN ZUM BELADEN/ENTLADEN DER EINRICHTUNG
NUCLEAR FUEL TRANSPORT DEVICE AND METHOD OF LOADING/UNLOADING SAID DEVICE

(30) Priorité: 08.11.2006 FR 0654782
(43) Date de publication de la demande: 26.08.2009
(73) Titulaire: Commissariat à l'Énergie Atomique et aux Énergies Alternatives, 75015 Paris (FR)
(72) Inventeur: ARGOUD, Jean-Claude, 38330 Montbonnot (FR)
(74) Mandataire: Ilgart, Jean-Christophe
(86) Numéro de dépôt international: PCT/EP2007/061944
(87) Numéro de publication internationale: WO 2008/055907

(56) Documents cités:
- JP-A- 9 236 691
- US-A- 2 514 909
- US-A- 4 197 467
- US-A- 5 406 600

## Description

### DOMAINE TECHNIQUE ET ART ANTÉRIEUR

La présente invention se rapporte au transport de combustible nucléaire irradié, notamment entre une piscine de refroidissement et un dispositif d'entreposage.

La présente invention se rapporte, en particulier à un emballage de transport permettant un entreposage à l'horizontal ou à la vertical du combustible irradié contenu dans un étui.

Dans le cadre de la gestion des combustibles irradiés, après leur utilisation en réacteur, ceux ci sont entreposés pour refroidir dans la piscine d'un bâtiment, dit bâtiment combustible jouxtant le bâtiment réacteur.

Les combustibles irradiés sont ensuite évacués vers un dispositif d'entreposage en attente d'un exutoire définitif qui peut être le retraitement ou l'entreposage.

Compte tenu de la capacité des piscines d'entreposage il est nécessaire d'envisager une solution intermédiaire.

Dans ce cadre, on envisage de placer les combustibles irradiés dans un étui métallique, qui constitue la première barrière de confinement. Ensuite, un étui est placé dans un emballage formant un dispositif de transport qui constitue une protection mécanique pour l'étui et une seconde barrière de confinement au cours de son transport.

L'emballage de transport limite le transfert de contamination lors du transport de l'étui chargé de combustible nucléaire.

Pour positionner les assemblages de combustible nucléaire dans l'étui et dans l'emballage de transfert, l'une des possibilités est l'utilisation d'une enceinte radioprotectrice dite « chaude », avec manipulation à distance des différents éléments par des bras manipulateurs : il est évident que le personnel ne peut se trouver à côté des éléments non radioprotégés. L'inconvénient de cette méthode en est la lourdeur, et par là, la durée et le coût, tant de l'enceinte que des outils et bras manipulateurs.

Une autre possibilité est de réaliser un chargement sous eau. En effet, l'eau étant un bon radioprotecteur et les centrales possédant toutes une piscine, il a été proposé de conditionner le matériau radioactif directement dans les piscines. Dans ce cadre, l'étui métallique de confinement est immergé dans la piscine, et le combustible y est chargé. L'ouverture de chargement de l'étui est alors obturée par un bouchon, cette étape a lieu à sec tel que décrit dans le document FR 2 806 828. Cependant il n'est pas décrit quand et comment cet étui est mis en place dans l'emballage de transport.

Le document US 4 780 269 décrit un chargement d'un étui en piscine, l'étui ayant été préalablement mis en place dans un emballage de transport. Ainsi, l'étui et l'emballage de transport sont immergés simultanément. L'étui est ensuite fermé par un bouchon dans la piscine, puis l'ensemble formé par l'emballage et l'étui est retiré de la piscine pour la fermeture de l'emballage et sa mise en place sur une plate-forme de camion en vue de son transport jusqu'à une zone d'entreposage.

Il existe deux modes d'entreposage :
- le premier mode d'entreposage est un entreposage en position verticale, les étuis étant disposés dans des puits. Ce mode d'entreposage permet un gain de place important, cependant sa construction est très coûteuse et très lourde à mettre en oeuvre. En effet, il faut creuser des puits, couler des fondations... De plus, la législation requiert que l'on puisse récupérer le combustible nucléaire à tout moment. Or en cas de rupture de l'étui, la récupération du combustible dans le fond du puit devient très laborieuse,
- le deuxième mode d'entreposage est un entreposage horizontal, les logements horizontaux en béton sont posés sur une chape en béton, auquel on peut généralement accéder par leurs deux extrémités.

Le document US 4 780 269 décrit également un emballage de transport et un dispositif d'entreposage pour un entreposage horizontal des étuis de combustible nucléaire. Le transfert de l'étui entre l'emballage de transport et le dispositif d'entreposage s'effectue au moyen d'un vérin. Le côté ouvrable de l'emballage est mis en regard d'une première extrémité ouverte du dispositif d'entreposage, puis le vérin pénètre par une deuxième extrémité ouverte du dispositif d'entreposage, opposée à la première extrémité du dispositif d'entreposage. L'étui sort alors par la première extrémité pour pénétrer dans l'emballage. L'extrémité libre de vérin ou un treuil vient alors saisir l'étui et exerce une force de traction pour l'amener dans le dispositif d'entreposage.

Le document US 5 406 600 décrit un dispositif de transport de combustibles nucléaires comportant un fût d'axe longitudinal délimitant une alvéole destinée a contenir un étui chargé de combustibles nucléaires. L'alvéole est munie a une première extrémité longitudinale d'une première ouverture obturée par des moyens d'obturation et destinée a permettre le passage dé l'étui et a une deuxième extrémité longitudinale dune deuxième ouverture obturée par un bouchon. Pour permettre le transfert de l'étui le bouchon placé sur la deuxième ouverture est retiré pour insérer l'élément de transmission.

Le transfert de l'étui vers le module de stockage nécessite le retrait de la plaque de protection biologique, la continuité de protection biologique de l'environnement par rapport à l'étui est alors rompue.

C'est par conséquent également un but de la présente invention d'offrir un dispositif de transport capable de former une véritable barrière biologique à tout instant du transport du combustible nucléaire.

C'est également un but de la présente invention d'offrir un dispositif de transport permettant un conditionnement des combustibles nucléaires irradiés en piscine.

C'est également un but de la présente invention d'offrir un dispositif de transport permettant un entreposage horizontal sûr et simple d'un étui.

C'est également un but de la présente invention d'offrir un dispositif de transport permettant la récupération de l'étui pour le stocker dans un autre lieu ou le retraiter.

### EXPOSÉ DE L'INVENTION

Les buts précédemment énoncés sont atteints par un emballage de transport comportant deux extrémités ouvertes axialement opposées et obturables par des bouchons. Une première extrémité permettant le chargement/déchargement de l'étui et une deuxième extrémité servant au passage d'un moyen apte à appliquer un effort de poussée/de traction sur l'étui, tout en assurant la continuité de la protection biologique. Le bouchon obturant l'extrémité opposée à celle de chargement/déchargement comportant un passage muni d'un élément de transmission d'effort formant une barrière biologique.

En d'autres termes, on réalise un bouchon composite dont la partie centrale peut se déplacer avec le dispositif de déchargement/chargement en s'interposant entre le dispositif de déchargement/chargement et l'étui tout en maintenant une continuité dans la barrière biologique pendant toute la phase de déchargement/chargement.

En position horizontale la première extrémité permet de s'accoster à un opercule pour permettre le déchargement/chargement d'un étui rempli de combustibles dans un dispositif d'entreposage. A l'autre extrémité, une tige d'un vérin pour décharger l'emballage applique une force de poussée/de traction sur une extrémité longitudinale de l'étui par l'intermédiaire dudit élément de transmission d'effort.

Ainsi la continuité de la protection biologique est assurée.

Par ailleurs, la conception du dispositif de transport selon l'invention le rend particulièrement adapté au chargement en piscine, en permettant le chargement d'un étui rempli de combustibles usés sous eau et les différentes opérations pour fermer l'étui de façon étanche.

En effet, un joint gonflable prévu entre l'alvéole et l'étui destiné à être chargé dans l'emballage permet de limiter le transfert de contamination dû à l'étui. Par ailleurs, il est avantageusement prévu que la différence entre la hauteur de l'ouverture de l'emballage et celle de l'étui soit suffisante pour permettre les opérations de fermeture de l'étui de façon étanche avec un système automatique. Un système de vidange peut également être prévu.

Le dispositif de transport sert donc de protection biologique et mécanique et permet un transfert sûr de l'étui dans un dispositif d'entreposage.

La présente invention a alors principalement pour objet un dispositif de transport de combustibles nucléaires comportant un fût d'axe longitudinal délimitant une alvéole destinée à contenir un étui chargé de combustibles nucléaires, ladite alvéole étant munie à une première extrémité longitudinale d'une première ouverture obturée par des moyens d'obturation et destinée à permettre le passage de l'étui, et à une deuxième extrémité longitudinale d'une deuxième ouverture obturée par un bouchon, ledit bouchon comportant un passage traversant et un élément de transmission d'effort formant protection biologique monté à coulissement dans ledit passage, ledit passage étant destiné à permettre à un dispositif de déchargement/chargement d'appliquer sur l'étui une force de poussée selon une direction longitudinale en direction de la première ouverture pour décharger un étui, ou une force de traction en direction de la deuxième ouverture pour charger l'étui dans le dispositif de transport.

Dans un exemple de réalisation, le passage du bouchon de la deuxième ouverture est obturé du côté extérieur par une tape et du côté intérieur par l'élément de transmission d'effort, ledit élément étant apte à coulisser dans l'alvéole.

L'élément est par exemple une pièce cylindrique massive ajustée au diamètre du passage et à celui de l'alvéole.

Un système d'étanchéité est avantageusement prévu entre l'élément de transmission d'effort et le passage traversant du bouchon.

L'élément de transmission d'effort peut comporter une pince de préhension pour venir s'accrocher sur l'étui de manière automatique afin de transmettre un effort de traction sur celui-ci.

Dans un exemple particulièrement avantageux, les moyens d'obturation de la première ouverture comportent un premier bouchon du côté extérieur et un bouchon supplémentaire du côté intérieur, le bouchon supplémentaire formant une barrière biologique lorsque le premier bouchon est retiré.

Le bouchon supplémentaire peut être monté mobile en rotation autour d'un axe orthogonal à l'axe longitudinal, et comporte un passage d'axe longitudinal de diamètre apte à permettre le passage de l'étui et disposé de telle sorte, qu'une rotation du bouchon supplémentaire autour de l'axe de rotation permet un alignement de l'axe du passage du bouchon supplémentaire avec l'axe de l'alvéole pour permettre le passage de l'étui à travers le bouchon supplémentaire.

Un joint gonflable peut être prévu sur une paroi intérieure de l'alvéole du côté dudit élément et destinée à venir en contact avec l'étui.

Avantageusement, le dispositif de transport comporte des capots amortisseurs recouvrant les extrémités longitudinales dudit dispositif de transport.

Un système de contrôle de l'étanchéité de l'alvéole comportant un moyen d'injection d'hélium entre deux joints concentriques entre le bouchon et le fût ou entre la tape et le bouchon peut être prévu, l'un des joints étant radialement interne et l'autre joint étant un joint intermédiaire, et un moyen de détection de la présence d'hélium en le joint intermédiaire et un joint radialement externe.

La présente invention a également pour objet un procédé de déchargement d'un dispositif de transport selon la présente invention, d'un étui chargé de combustibles nucléaires, ledit procédé comportant l'étape d'application d'un effort de poussée à partir de la deuxième ouverture en direction de la première ouverture, de manière à faire coulisser l'étui dans le dispositif vers la première ouverture et à faire sortir l'étui dudit dispositif de transport.

La présente invention a également pour objet un procédé de déchargement d'un dispositif de transport selon la présente invention, avec un étui chargé de combustibles nucléaires, ledit procédé comportant l'étape d'application d'un effort de traction à partir de la première ouverture en direction de la deuxième ouverture, de manière à faire coulisser l'étui à l'intérieur du dispositif de transport.

### BRÈVE DESCRIPTION DES DESSINS

La présente invention sera mieux comprise à l'aide de la description qui va suivre et des dessins annexés, sur lesquels :
- la figure 1 est une vue en coupe longitudinale d'un dispositif de transport selon la présente invention,
- les figures 2A et 2B sont des représentations schématiques des étapes de déchargement et de chargement respectivement du dispositif de transport selon la présente invention.

### EXPOSÉ DÉTAILLÉ DE MODES DE RÉALISATION PARTICULIERS

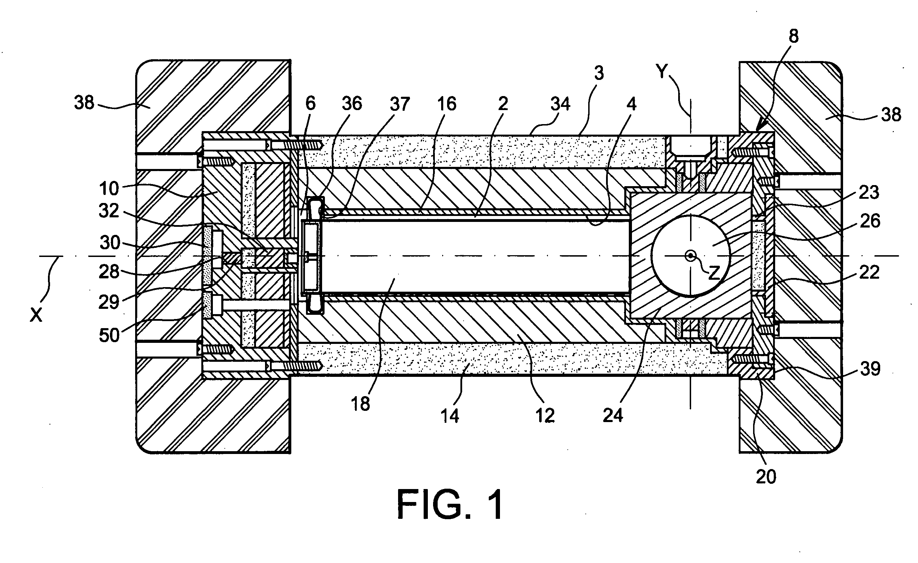

Sur la figure 1, on peut voir un exemple de réalisation d'un dispositif selon la présente invention, comportant une chambre 2 d'axe X appelée alvéole destinée à recevoir un étui 18, délimitée par un fût cylindrique 3. L'alvéole 2 comporte une première 4 et une deuxième ouverture 6 longitudinale obturée par un premier 8 et un deuxième bouchon 10 respectivement.

Les premier et deuxième bouchons 8, 10 comportent des ouvertures aptes à permettre le passage d'un objet qui sera décrit par la suite.

Le fût 3 comporte de manière avantageuse un premier cylindre intérieur 12 en acier et un deuxième cylindre extérieur 14 en résine. On pourrait prévoir de réaliser le cylindre entièrement en acier.

Le fût 3 comporte également une chemise intérieure 16 recouvrant la paroi intérieure du cylindre intérieur 12. L'étanchéité entre la chemise intérieure 16 et le cylindre intérieur 12 est assurée par des soudures lors de la fabrication de l'emballage.

Un étui 18 chargé de combustible nucléaire, notamment du combustible nucléaire irradié est disposé à l'intérieur de la chemise 16, par exemple sous eau dans une piscine de refroidissement.

La première ouverture 4 est destinée à permettre le passage de l'étui 18 lors de son chargement dans le dispositif de transport et lors de son déchargement vers un module d'entreposage.

Le premier bouchon 8 obturant l'ouverture 4, comporte une virole extérieure 20 fixées sur le fût 3, et un premier bouchon central 22, qui est lui-même fixé à la virole 20. Les fixations sont réalisées, par exemple par vissage.

La virole 20 comporte une ouverture centrale 23 obturée par le premier bouchon 22, cette ouverture 23 permettant le passage de l'étui 18.

De manière très avantageuse, un bouchon supplémentaire 24 est prévu du côté de l'ouverture de chargement/déchargement, formant une barrière biologique lorsque le bouchon central 22 a été retiré.

Le bouchon supplémentaire 24 est de forme sensiblement cylindrique monté en rotation autour de son axe Y, l'axe Y étant aligné avec un diamètre du fût 3 et orthogonal à l'axe X. Le bouchon supplémentaire 24 comporte un passage 26 cylindrique de diamètre apte à permettre le passage de l'étui 18 et d'axe Z orthogonal à l'axe Y.

En position d'obturation, telle que représentée sur la figure 1, l'axe Z du passage 26 est orthogonal à l'axe X de l'alvéole 2, empêchant son passage et formant une barrière biologique.

En position de chargement ou de déchargement, l'axe Z du passage 26 est aligné avec l'axe X de l'alvéole 2, le passage 26 prolonge l'alvéole 2 et permet le déchargement ou le chargement de l'étui par coulissement dans le passage 26 et dans l'alvéole 2.

Le bouchon supplémentaire 24 est actionné, par exemple manuellement depuis l'extérieur de l'emballage.

Selon la présente invention, le bouchon 10 obturant la deuxième ouverture 6, comporte un passage traversant axial 28 obturé par une tape 30, et un élément de transmission d'effort 32 apte à coulisser dans le passage central 28 et dans l'alvéole 2. Cet élément 32 forme une barrière biologique.

Le passage peut également comporter un bouchon 29 formant une protection biologique supplémentaire entre la tape 30 et l'élément de transmission d'effort 32.

L'élément 32 peut coulisser dans le passage 28 et débouché dans l'alvéole 2. Ainsi, par application d'une force de poussée sur l'élément 32 en direction de la première ouverture 4, on peut faire glisser l'étui 18 dans l'alvéole 2.

L'élément 32 forme un poussoir lors d'un déchargement, et un élément tracteur lors d'un chargement. L'élément de transmission d'effort 32 comporte une pièce cylindrique massive ajustée au diamètre du passage 30 et de l'alvéole 2 qui forme, comme écrit précédemment, une protection biologique.

L'élément 32 comporte avantageusement à son extrémité destinée à venir en contact avec l'étui, une empreinte (non représentée) permettant son auto alignement avec l'étui lors de l'application d'une force de poussée

Dans un exemple de réalisation, l'élément 32 comporte une pince de préhension, composée de deux ou trois doigts destinés à se connecter sur l'étui de manière automatique. Ainsi en cas de chargement de l'emballage, l'élément 32 peut transmettre un effort de traction sur l'étui.

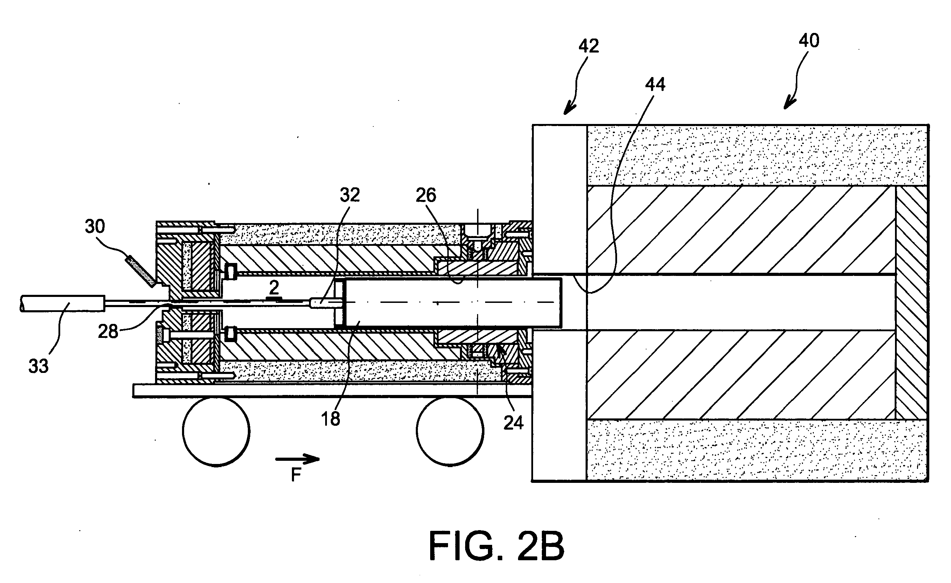

On prévoit de faire pénétrer l'extrémité libre d'un vérin 33 (figure 2B) dans le passage 28 lorsque la tape 30 est ouverte.

Il est prévu de fixer l'extrémité libre du vérin 33 sur l'élément 32, ainsi lorsque l'étui 18 est évacué de l'alvéole 2, l'élément 32 est ramené dans sa position repos lorsque le vérin 33 se rétracte.

La liaison entre l'élément 32 et la tige du vérin est réalisée, par exemple par un système vis-écrou. La liaison entre le vérin 33 et l'élément de transmission d'effort 32 est réalisée lorsque la tape de fermeture 30 est ouverte.

La dimension axiale du vérin 33 est donc prévue pour permettre le coulissement complet de l'étui 18 en dehors de l'alvéole 2.

On pourrait envisager de pousser l'étui 18 directement avec le vérin 33, cependant l'interposition de l'élément 32 procure, comme décrit précédemment une protection biologique supplémentaire pour les personnes manipulant le vérin 33.

Il est également prévu, de manière avantageuse un système d'étanchéité (non représenté) entre le corps du vérin et la face extérieure du bouchon 10, pour assurer le confinement de l'ensemble vérin-emballage vis-à-vis de l'extérieur.

Lorsque le vérin est monté sur le bouchon 10, la tige du vérin 33 pénètre dans le passage 28 et se connecte directement sur l'élément 32.

Le dispositif de transport selon l'invention comporte avantageusement un joint gonflable 36 disposé dans une gorge 37 pratiquée dans la paroi intérieure de l'alvéole 2 du côté de la deuxième extrémité 6. Celui-ci vient en contact avec le corps de l'étui 18 et assure le confinement de l'étui 18 en formant une barrière au niveau d'un jeu latéral entre l'alvéole 2 et le corps de l'étui 18, afin d'éviter, lors du chargement en piscine du dispositif de transport avec un étui, que l'eau ne s'infiltre dans le jeu entre l'étui et la paroi de l'alvéole 2.

Les personnes manipulant le vérin sont complètement protégées des rayonnements émis par le combustible contenu dans l'étui et non arrêtés par l'étui.

Il est également prévu dans l'exemple représenté, que la différence de hauteur entre l'ouverture de l'emballage et celle de l'étui soit suffisante pour permettre des opérations de fermeture de l'étui en piscine, de façon étanche avec un système automatique

Des moyens d'étanchéité sont également prévus entre les différentes pièces formant le dispositif de transport, notamment entre la virole 20 et le fût 3, entre le premier bouchon 22 et la virole 20, entre le bouchon 10 et le fût 3 et entre l'élément 32 et le bouchon 10. A titre d'exemple, trois joints toriques concentriques peuvent être prévus entre la tape 30 et le bouchon 10, de même entre le bouchon 10 et le fût 3.

Ce montage permet également un contrôle rapide du confinement de l'emballage.

L'élément 32 comporte des joints périphériques (non représentés), par exemple pour limiter les risques de transfert de contamination lors des mouvements de translation du vérin. Ces joints sont par exemple des joints toriques au nombre de deux, montés en piston, assurant ainsi l'étanchéité entre le bouchon 10 et l'élément 32.

Le confinement de l'étui est réalisé par différentes barrières formées par la gaine du combustible, la soudure de l'étui et les joints en matière synthétique qui assure l'étanchéité de dispositif de transport.

Il est également prévu dans le dispositif de transport un système (non représenté) de contrôle de l'étanchéité de l'emballage. Par exemple, dans le couvercle 10, est prévue une prise d'échantillon équipée d'un raccord rapide auto-obturant protégée par une tape étanche, permettant de contrôler l'intérieur de l'emballage.

L'étanchéité de cette prise d'échantillon est assurée par une tape 50 équipée de deux joints toriques en série.

Ce système peut comporter .
- une prise d'injection d'hélium placée entre deux joints des trois joints disposés entre la tape 30 et le bouchon 10 ou entre le bouchon 10 et le fût 3 , l'un des joints étant le joint radialement le plus à l'intérieur et l'autre joint étant un joint intermédiaire,
- une seconde prise de mesure sur laquelle est connecté un détecteur hélium, cette prise est, par exemple placée entre le joint intermédiaire et le troisième joint radialement le plus à l'extérieur.

Ainsi une détection d'hélium entre le joint intermédiaire et le troisième joint indique que le joint intermédiaire n'est pas étanche.

Il est prévu, dans un exemple préféré des capots de protection 38 destinés à recouvrir et à entourer les extrémités longitudinales du fût 3 pour les protéger en cas de choc. Ces capots 38 ont la forme de cylindre muni d'une cavité centrale 39 de diamètre intérieur sensiblement égal au diamètre extérieur du fût 3. Les cavités 39 sont emboîtées sur les extrémités longitudinales du fût 3, et les capots sont fixés par exemple par des vis aux bouchons 8, 10. Ces capots protègent les systèmes d'étanchéité.

Ces capots sont enlevés lors du chargement ou du déchargement de l'étui du dispositif de transport, pour permettre l'ouverture de la tape 30.

Ce dispositif permet donc, soit de décharger l'emballage de transport par transfert de l'étui dans le dispositif d'entreposage, soit de réaliser son retrait du dispositif d'entreposage vers l'emballage de transport.

L'ensemble des systèmes d'étanchéité mis en oeuvre, en particulier celui entre le corps du vérin et l'emballage et celui du poussoir 32 équipé de sa pince permet de conserver l'intégrité de l'étanchéité de l'emballage, ainsi que la protection biologique.

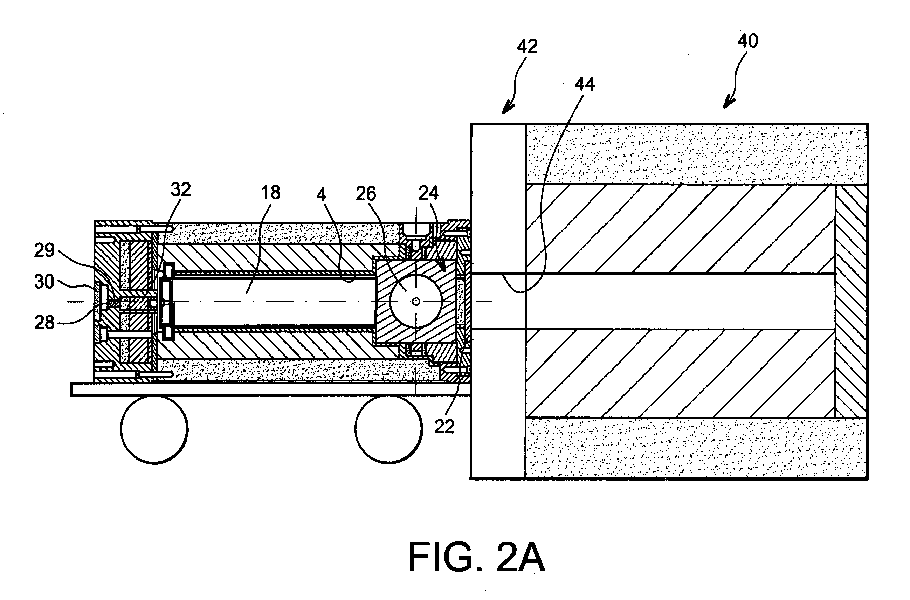

Nous allons maintenant décrire le déchargement d'un étui contenu dans un dispositif de transport selon la présente invention sur la base des figures 2A et 2B :
- Le dispositif de transport arrive sur le site de déchargement, il est généralement déplacé dans une position couchée et est prêt au déchargement.
- Puis les capots amortisseurs 38 sont retirés.
- La première extrémité 4 du dispositif est alignée avec une entrée 44 d'une enceinte réceptrice 40 pour un entreposage horizontal de l'étui 18. Des moyens 42 sont interposés entre la première extrémité du dispositif de transport et l'entrée 44 de l'enceinte 40 pour retirer le premier bouchon 22 et assurer le confinement permanent de l'étui 18. (Figure 2A)

La suite du déchargement est représentée sur la figure 2B :
- le premier bouchon 22 est retiré,
- le bouchon supplémentaire 24 est pivoté autour de l'axe Y de manière à aligner le passage 26 avec l'alvéole 2,
- la tape 30 est ouverte ; si un bouchon 29 est prévu, celui-ci est retiré,
- le vérin est fixé de manière étanche sur le bouchon 10 et l'extrémité libre du vérin 33 est fixée sur la face arrière du poussoir 32. Le vérin est alors déployé. L'élément 32 transmet la force de poussée à l'étui 18 dans le sens de la flèche F, l'étui 18 coulisse dans l'alvéole 2, pénètre dans le passage 26 du bouchon supplémentaire 24, puis dans l'enceinte réceptrice 40.

Le vérin 33 est déployé jusqu'à ce que l'étui 18 soit complètement dans l'enceinte 40.

Le vérin 33 est ensuite rétracté, ramenant l'élément 32 dans sa position de repos, à l'intérieur du bouchon 8.

Lorsque le vérin 33 est complètement sorti du dispositif, la tape 30 est refermée.

Le bouchon supplémentaire 24 pivote pour revenir en position repos dans laquelle l'axe Z du passage 26 est orthogonal à celui de l'alvéole 2.

Le premier bouchon 22 est remis en place dans la virole 20.

Le chargement, à partir de l'enceinte réceptrice, s'effectue de manière similaire en appliquant un effort de traction sur l'élément 32 qui tire sur l'étui pour le faire pénétrer dans l'alvéole 2.

Le dispositif d'entreposage comporte une entrée 44 pour le passage de l'étui et une extrémité 46 pour le passage du vérin afin qu'il applique un effort de poussée sur l'étui. Le transfert s'effectue de manière équivalente au déchargement du dispositif selon l'invention décrit précédemment.

Pendant toute la phase de déchargement ou de chargement, l'étanchéité vis-à-vis de l'extérieur est maintenue grâce aux systèmes d'étanchéité décrits précédemment.

## Revendications

1. Dispositif de transport de combustibles nucléaires comportant un fût (3) d'axe longitudinal (X) délimitant une alvéole (2) destinée à contenir un étui (18) chargé de combustibles nucléaires, ladite alvéole (2) étant munie à une première extrémité longitudinale d'une première ouverture (4) obturée par des moyens d'obturation (22, 24) et destinée à permettre le passage de l'étui (18), et à une deuxième extrémité longitudinale d'une deuxième ouverture (6) obturée par un bouchon (10), **caractérisé en ce qu** le bouchon (10) comporte un passage traversant et un élément de transmission d'effort (32) formant protection biologique monté à coulissement dans ledit passage (28), ledit élément de transmission d'effort étant apte à exercer un effort de poussée ou de traction sur l'étui, ledit passage (28) étant destiné à permettre à un dispositif de déchargement/chargement d'appliquer sur l'étui (18) par l'intermédiaire de l'élément de transmission d'efforts une force de poussée respectivement selon une direction longitudinale en direction de la première ouverture (4) pour décharger un étui (18), ou une force de traction en direction de la deuxième ouverture (6) pour charger l'étui (18) dans le dispositif de transport.

2. Dispositif de transport selon la revendication 1, dans lequel le passage du bouchon (10) de la deuxième ouverture (6) est obturé du côté extérieur par une tape (30) et du côté intérieur par l'élément de transmission d'effort(32), ledit élément étant apte à coulisser dans l'alvéole.

3. Dispositif selon la revendication 1 ou 2, dans lequel ledit élément de transmission d'effort (32) comporte une pièce cylindrique massive ajustée au diamètre du passage (30) et à celui de l'alvéole (2) formant une protection biologique, et dans lequel un système d'étanchéité est prévu entre ledit élément (32) et le passage traversant (28) du bouchon (10).

4. Dispositif selon la revendication 1, 2 ou 3, dans lequel ledit élément de transmission d'effort (32) comporte une pince de préhension pour venir s'accrocher sur l'étui de manière automatique afin de transmettre un effort de traction sur celui-ci.

5. Dispositif selon l'une quelconque des revendications précédentes, dans lequel les moyens d'obturation (22, 24) de la première ouverture (4) comportent un premier (22) bouchon du côté extérieur et un bouchon supplémentaire (24) du côté intérieur, le bouchon supplémentaire (24) formant une barrière biologique lorsque le premier bouchon (22) est retiré.

6. Dispositif selon la revendication précédente, dans lequel le bouchon supplémentaire (24) est monté mobile en rotation autour d'un axe orthogonal (Y) à l'axe longitudinal, et comporte un passage (26) d'axe longitudinal (Z) de diamètre apte à permettre le passage de l'étui (18) et disposé de telle sorte, qu'une rotation du bouchon supplémentaire (24) autour de l'axe de rotation (Y) permet un alignement de l'axe (Z) du passage (28) du bouchon supplémentaire avec l'axe (X) de l'alvéole (2) pour permettre le passage de l'étui (18) à travers le bouchon supplémentaire (24).

7. Dispositif selon l'une quelconque des revendications précédentes, comportant un joint gonflable (36) sur une paroi intérieure de l'alvéole (2) du côté dudit élément de transmission d'effort (32) et destinée à venir en contact avec l'étui (18).

8. Dispositif selon l'une quelconque des revendications précédentes, comportant des capots amortisseurs (38) recouvrant les extrémités longitudinales dudit dispositif de transport.

9. Dispositif selon l'une quelconque des revendications précédentes en combinaison avec la revendication 2, comportant un système de contrôle de l'étanchéité de l'alvéole comportant un moyen d'injection d'hélium entre deux joints concentriques entre le bouchon et le fût ou entre la tape et le bouchon, l'un des joints étant radialement interne et l'autre joint étant un joint intermédiaire, et un moyen de détection de la présence d'hélium entre le joint intermédiaire et un joint radialement externe.

10. Procédé de déchargement d'un dispositif de transport selon l'une quelconque des revendications 1 à 9, d'un étui chargé de combustibles nucléaires, ledit procédé comportant l'étape d'application d'un effort de poussée à partir de la deuxième ouverture en direction de la première ouverture, de manière à faire coulisser l'étui dans le dispositif vers la première ouverture et à faire sortir l'étui dudit dispositif de transport.

11. Procédé de chargement d'un dispositif de transport selon l'une quelconque des revendications 1 à 9, avec un étui chargé de combustibles nucléaires, ledit procédé comportant l'étape d'application d'un effort de traction à partir de la première ouverture en direction de la deuxième ouverture, de manière à faire coulisser l'étui à l'intérieur du dispositif de transport.

## Claims

1. Device for the transportation of nuclear fuels which comprises a barrel (3) with a longitudinal axis (X) which forms a compartment (2) designed to contain a casing (18) loaded with nuclear fuel, the said compartment (2) being equipped, at a first longitudinal end, with a first opening (4) which is closed off by a closure device (22, 24) and designed to allow passage of the casing (18), and at a second longitudinal end with a second opening (6) closed off by a plug (10) **characterized in that** the plug (10) comprises a through passage and a component for transmitting force (32) which forms a biological shield fitted so that it slides in the said passage (28), the said force transmission component being designed to exerting a thrust force on the casing, the said passage (28) being designed to allow a loading/unloading device to apply, respectively, a thrust force on the casing (18) through the force transmission component, along a longitudinal direction in the direction of the first opening (4) in order to unload a casing (18), or a traction force in the direction of the second opening (6) in order to load the casing (18) into the transportation device.

2. Transportation device according to claim 1 wherein the passage of the plug (10) in the second opening (6) is closed off on the outside by a door (30) and on the inside by the force transmission component (32), the said component being able to slide inside the compartment.

3. Device according to claim 1 or 2, wherein the said force transmission component (32) comprises a massive cylindrical component which fits the diameter of the passage (30) and the diameter of the compartment (2) forming a biological shield, and wherein a sealing system is fitted between the said component (32) and the passage (28) through the plug (10).

4. Device according to claim 1, 2 or 3 wherein the said force transmission component (32) comprises a gripper which attaches to the casing automatically in order to transfer a traction force onto the latter.

5. Device according to any of the preceding claims, wherein the means (22, 24) for closing off the first opening (4) comprises a first plug (22) on the outside and an additional plug (24) on the inside, the additional plug (24) forming a biological barrier when the first plug (22) is withdrawn.

6. Device according to the previous claim, wherein the additional plug (24) is fitted so that it can rotate around an axis (Y) which is orthogonal to the longitudinal axis, and comprises a passage (26) with a longitudinal axis (Z) whose diameter is such that it allows the casing (18) to pass through and which is arranged in such a manner that a rotation of the additional plug (24) around the axis of rotation (Y) results in the axis (Z) of passage (28) of the additional plug being aligned with the axis (X) of the compartment (2), so that the casing (18) may pass through the additional plug (24).

7. Device according to any of the preceding claims, comprising an inflatable seal (36) on an interior wall of the compartment (2) towards the said force transmission component (32) and which is designed to come into contact with the casing (18).

8. Device according to any of the previous claims comprising shock absorbing caps (38) which cover the longitudinal ends of the said transportation device.

9. Device according to any of the preceding claims in combination with claim 2, comprising a system for checking that the compartment is sealed which comprises a means for injecting helium between two concentric seals between the plug and the barrel or between the door and the plug, with one of the seals being radially internal and the other seal being an intermediate seal, and a means of detecting the presence of helium between the intermediate seal and a radially external seal.

10. Method for unloading, from a transportation device according to any of claims 1 to 9, of a casing loaded with nuclear fuel, the said method comprising a step in which a thrust force is applied from the second opening in the direction of the first opening so that the casing is made to slide in the device towards the first opening causing the casing to emerge from the said transportation device.

11. Method for loading a transportation device according to one of claims 1 to 9 with a casing loaded with nuclear fuel, the said method comprising a step in which a traction force is applied from the first opening in the direction of the second opening so that the casing is made to slide inside the transportation device.

## Patentansprüche

1. Transportvorrichtung für nukleare Brennstoffe, umfassend ein Fass (3) mit einer Längsachse (X), welches eine Höhlung (2) begrenzt, die dazu bestimmt ist, einen Behälter (18) zu enthalten, der mit nuklearen Brennstoffen beladen ist, wobei die Höhlung (2) an einem ersten Längsende mit einer ersten Öffnung (4) ausgestattet ist, die von Verschlussmitteln (22, 24) verschlossen ist, und die dazu bestimmt ist, den Durchgang des Behälters (18) zu ermöglichen, und an einem zweiten Längsende mit einer zweiten Öffnung (6) ausgestattet ist, die von einem Stopfen (10) verschlossen ist,
**dadurch** gekennzeichet, dass der Stopfen (10) einen hindurch verlaufenden Durchgang und eine Kraftübertragungselement (32) umfasst, welches einen biologischen Schutz bildet und gleitend in dem Durchgang (28) angebracht ist, wobei das Kraftübertragungselement dazu geeignet ist, eine Druck- oder Zugkraft auf den Behälter auszuüben, wobei der Durchgang (28) dazu bestimmt ist, einer Entlade-/Ladevorrichtung zu ermöglichen, auf den Behälter (18), vermittels des Kraftübertragungselements, eine Druckkraft auszuüben, jeweils entlang einer Längsrichtung, in Richtung der ersten Öffnung (4), um einen Behälter (18) zu entladen, oder eine Zugkraft in Richtung der zweiten Öffnung (6) auszuüben, um den Behälter (18) in die Transportvorrichtung zu laden.

2. Transportvorrichtung nach Anspruch 1, wobei der Durchgang des Stopfens (10) der zweiten Öffnung (6) von der Außenseite durch einen Spund (30) und von der Innenweite durch das Kraftübertragungselement (32) verschlossen ist, wobei das Element dazu geeignet ist, in der Höhlung zu gleiten.

3. Vorrichtung nach Anspruch 1 oder 2, wobei das
Kraftübertragungselement (32) ein massives zylindrisches Stück umfasst, das an den Durchmesser des Durchgangs (30) und an den der Höhlung (2) angepasst ist, was einen biologischen Schutz bildet, und wobei ein Abdichtungssystem zwischen dem Element (32) und dem hindurch verlaufenden Durchgang (28) des Stopfens (10) vorgesehen ist.

4. Vorrichtung nach Anspruch 1, 2 oder 3,
wobei das Kraftübertragungselement (32) eine Greifzange umfasst, um in automatischer Weise zum Einhaken an den Behäiter zu gelangen, um eine Zugkraft auf diesen auszuüben.

5. Vorrichtung nach einem der vorhergehenden Ansprüche, wobei die Verschlussmittel (22, 24) der ersten Öffnung (4) einen ersten (22) Stopfen auf der Außenseite und einen zusätzlichen Stopfen (24) auf der Innenseite umfassen, wobei der zusätzliche Stopfen (24) eine biologische Barriere bildet, wenn der erste Stopfen (22) herausgezogen ist.

6. Vorrichtung nach dem vorhergehenden Anspruch, wobei der zusätzliche Stopfen (24) um eine zur Längsachse orthogonal Achse (Y) drehbar angebracht ist, und einen Durchgang (26) mit einer Längsachse (Z) umfasst, mit einem Durchmesser, der geeignet ist, um den Durchgang des Behälters (18) zu ermäglichen, und so angeordnet ist, dass eine Drehung des zusätzlichen Stopfens (24) um die Rotationsachse (Y) eine Ausrichtung der Achse (Z) des Durchgangs (28) des zusätzlichen Stopfens zu der Achse (X) der Höhlung (2) ermöglicht, um den Durchgang des Behälters (18) durch den zusätzlichen Stopfen (24) hindurch zu ermöglichen.

7. Vorrichtung nach einem der vorhergehenden Ansprüche, umfassend eine aufblähbare Dichtung (36) an einer Innenwand der Höhlung (2) auf der Seite des Kraftübertragungselements (32) und dazu bestimmt, in Kontakt mit dem Behälter (18) zu kommen.

8. Vorrichtung nach einem der vorhergehenden Ansprüche, umfassend Dämpfungsabdeckungen (38), welche die Längsenden der Transportvorrichtung abdecken.

9. Vorrichtung nach einem der vorhergehenden Ansprüche in Kombination mit Anspruch 2, umfassend ein System zur Kontrolle der Abdichtung der Höhlung, umfassend ein Mittel zur Injektion von Helium zwischen zwei konzentrische Dichtungen zwischen dem Stopfen und dem Fass oder zwischen dem Spund und dem Stopfen, wobei eine der Dichtungen eine radial innere und die andere Wichtung eine Zwischendichtung ist, und ein Mittel zur Detektion der Anwesenheit von Helium zwischen der Zwischendichtung und einer radial äußeren Richtung.

10. Verfahren zum Entladen einer Transportvorrichtung nach einem der Ansprüche 1 bis 9 von einem mit nuklearen Brennstoffen beladenen Behälter, das Verfahren umfassend den Schritt, eine Druckkraft ausgehend von der zweiten Öffnung in Richtung der ersten Öffnung auszuüben, so dass bewirkt wird, dass der Behälter in der Vorrichtung auf die erste Öffnung zu gleitet, und so dass bewirkt wird, dass der Behälter die Transportvorrichtung verlässt.

11. Verfahren zum Beladen einer Transportvorrichtung nach einem der Ansprüche 1 bis 9 mit einem mit nuklearen Brennstoffen beladenen Behälter, das Verfahren umfassend den Schritt, eine Zugkraft ausgehend von der ersten Öffnung in Richtung der zweiten Öffnung auszuüben, so dass bewirkt wird, dass der Behälter in den Innenraum der Transportvorrichtung geleitet.
